# EUROPEAN PATENT SPECIFICATION

(11) **EP 4 487 458 B1**
(45) Date of publication and mention of the grant of the patent: **05.11.2025**
(21) Application number: 23708214.4
(22) Date of filing: 28.02.2023
(51) Int. Cl.: H02K 15/50

(54) **EXTRACTOR FOR THE EXTRACTION OF COPPER FROM THE LAMELLAR PACK OF DECOMMISSIONED ELECTRIC MOTORS, RELATIVE EXTRACTION PROCESS AND EXTRACTION BENCH COMPRISING AN EXTRACTOR AND A SHEAR**
EXTRAKTOR FÜR DIE EXTRAKTION VON KUPFER AUS DEM LAMELLENPAKET VON STILLGELEGTEN ELEKTROMOTOREN, ENTSPRECHENDES EXTRAKTIONSVERFAHREN UND EXTRAKTIONSBANK MIT EINEM EXTRAKTOR UND EINER SCHERE
EXTRACTEUR POUR L'EXTRACTION DE CUIVRE DU BLOC LAMELLAIRE DE MOTEURS ÉLECTRIQUES MIS HORS SERVICE, PROCÉDÉ D'EXTRACTION AFFÉRENTE ET BANC D'EXTRACTION COMPRENANT UN EXTRACTEUR ET UNE CISAILLE

(30) Priority: 03.03.2022 IT 202200004034
(43) Date of publication of application: 08.01.2025
(73) Proprietor: Silvan, Andrea, 36023 Vicenza (VI) (IT)
(72) Inventor: Silvan, Andrea, 36023 Vicenza (VI) (IT)
(74) Representative: Bettello, Pietro
(86) International application number: PCT/EP2023/054935
(87) International publication number: WO 2023/165962

(56) References cited:
- CN-A- 108 494 183
- CN-A- 112 821 684
- CN-B- 106 357 059
- US-A- 1 608 350
- US-A- 4 016 639

## Description

The present invention concerns an extractor for the extraction of copper from the lamellar pack of decommissioned electric motors, the relative extraction process and an extraction bench comprising an extractor and a shear.

The electric motors comprise in the lamellar pack of their stator a considerable number of copper windings necessary for the generation of the magnetic field that allows the operation thereof. These windings, once made, are linked to the stator and it is not possible to extract them easily, precisely because of the intricate path travelled by the copper wires composing them that cross each other and that are substantially knotted together at the portions that protrude at the ends of the stator.

Copper is an extremely important material for electrical applications as it is an excellent conductor and its cost is increasing year by year. It is therefore extremely important to be able to reuse the copper present in decommissioned electric motors that would otherwise be wasted, increasing environmental pollution and decreasing the amount of usable copper in circulation.

In the state of the art, devices and methods are known for the extraction of copper filaments from the lamellar pack of the stators of decommissioned electric motors.

In particular, it is known that in order to allow a fast extraction it is optimal to be able to cut the stator into two parts in a direction transverse with respect to its radial axis of symmetry, so as to divide the windings, thus being able to work on a stator portion that has at one end the protruding knot of the windings and at the other end the windings cut and therefore free.

This cutting operation can preferably be carried out by means of a shear with guillotine operation, preferably hydraulically operated.

The motor is placed on a concave housing located below the shear and which holds it in place and then the shear is lowered for cutting.

The extraction operation is carried out by means of an extractor. This usually presents a work surface on which sliding guides are located whose imaginary extensions meet each other at a crossing point and which are arranged in pairs in a radially symmetrical manner with respect to said crossing point, at which there is a circular support element adapted to hold in place the portion of electric motor previously cut, so as to present its radial axis of symmetry orthogonal to the work surface and the copper windings that protrude downwards.

On each of the sliding guides there is a claw able to slide along its sliding guide and provided with protrusions facing the crossing point. The claws have an upper opening inside which there is housed a pusher able to slide vertically through said opening so as to be able to rise with respect to the claw.

The set of claws is adapted to slide towards a decommissioned electric motor placed on the circular support element, so as to retain by means of the protrusions said copper filament and pull the lamellar pack out of the copper filament by effect of the upward thrust generated on it by the pushers that lift vertically.

This system presents several critical issues. In particular, it is necessary to replace the circular support element according to the dimensions of the motors to be processed, since its diameter must substantially coincide with that of the motor in order to be able to keep it in place.

In addition, the system can fail if a decommissioned motor that has suffered impacts and deformations and therefore has lost its symmetry is processed. In this case it may happen that the claws fail to hold it properly since the holding force is generated in an inhomogeneous way between the various claws and therefore the motor can move while lifting the lamellar pack by effect of the pushers, since the copper filament can escape the grip of some claws.

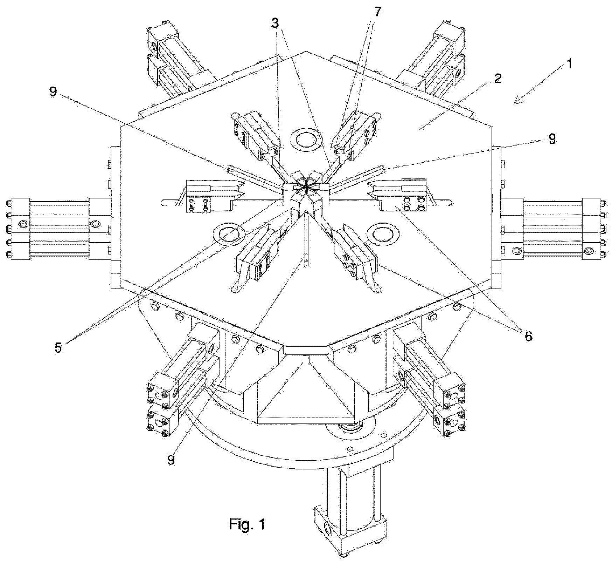

The most important document of the state of the art is the American document US 4016639 A, which provides (references are related to this document) an extractor for the extraction of copper from the lamellar pack of decommissioned electric motors, which comprises the following elements.
- a work surface (49) on which there is a plurality of sliding guides (39) which meet each other at a crossing point and which are arranged so as to divide the work surface (49) into circular sectors with the same radial extension with respect to said crossing point. See Figure 1.
- on each of said sliding guides (39) there being present, at their external portion with respect to the crossing point, a claw (41) able to slide along its sliding guide (39) and provided with protrusions facing the crossing point.
- the set of claws (41) being adapted to slide towards a decommissioned electric motor located at the crossing point with its radial axis of symmetry orthogonal to the work surface (49) and with the copper filament (17) protruding from the lamellar pack towards the work surface (49), so as to retain said copper filament (17) by means of the protrusions.

Further documents of the state of the art are: CN106357059B, CN112821684A, CN108 494183A and US1608350A.

The aim of the present invention is to improve the results obtainable with such an extractor, in particular by greatly increasing the possibilities of extraction of the copper filament.

This is achieved, according to the invention, by the features present in the characterising part of claim 1.

Further characteristics of the extractor are present in the dependent claims concerning the foregoing.

Another aim of the invention is to provide a relative process of extraction of copper from the lamellar pack.

In particular this aim is achieved by using expanders able to slide along the sliding guides and acting in opposition to the claws to retain like a greater combined force the protruding copper filaments, at the same time replacing the circular support element and thus eliminating the need to replace it continuously.

Finally, another aim of the invention is to provide an innovative extraction bench comprising the extractor referred to in the invention and a shear.

The characteristics of the invention will now be described in detail below, with reference to some of its particular embodiments, made by way of non-limiting example only, with the help of the attached drawing tables, where:
- Fig. 1 shows a perspective view of an extractor referred to in the invention;
- Fig. 2 shows a view of the extractor of Fig. 1 in which the internal expanders have been slightly distanced from each other;

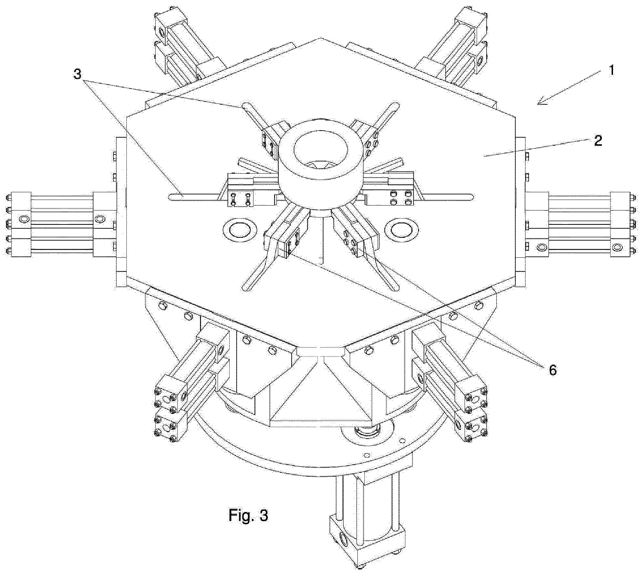

- Fig. 3 shows a perspective view of an extractor referred to in the invention in a configuration in which it is retaining the lamellar pack of an electric motor to be processed;
- Fig. 4 shows a perspective view of an extraction bench comprising a shear and an extractor referred to in the invention.

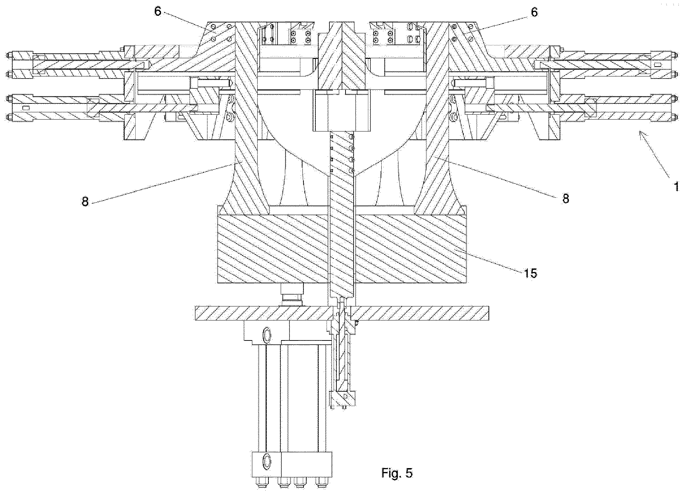

- Fig. 5 shows a cross-sectional view of an extractor referred to in the invention.

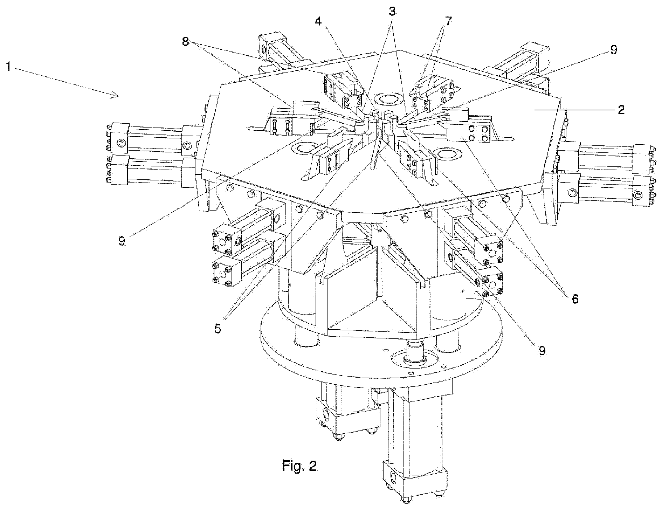

As visible in Figs. 1 and 2 an extractor 1 for the extraction of copper from the lamellar pack of decommissioned electric motors comprises a work surface 2 on which there is a plurality of sliding guides 3 which meet each other at a crossing point 4 and which are preferably arranged in pairs in a radially symmetrical manner with respect to said crossing point 4. The sliding guides 3 can however be arranged in any way so that they divide the work surface 2 into circular sectors with the same radial extension. On each of said sliding guides 3 there is present, at their external portion with respect to the crossing point 4, a claw 6 able to slide along its sliding guide 3 and provided with protrusions 7 facing the crossing point 4 and having an upper opening inside which a pusher 8 able to slide vertically through said opening is housed so as to be able to rise with respect to the claw 6.

The set of claws 6 is adapted to slide towards a decommissioned electric motor located at the crossing point 4 with its radial axis of symmetry orthogonal to the work surface 2 and with the copper filament protruding from the lamellar pack towards the work surface 2 so as to retain said copper filament by means of the protrusions 7 and to pull the lamellar pack out of the copper filament by effect of the upward thrust generated on it by the pushers 8 that lift vertically.

In a preferred embodiment the pushers 8 have their base resting on a support 15 that is placed below the work surface 2 and which can be lifted and lowered vertically so as to lift and lower the pushers 8 accordingly. Of course, since the pushers 8 vary their position with respect to the crossing point 4 according to the movement of the claws 6, their bases resting on the support 15 can slide on it without being retained in a fixed position. The support 15 may preferably be driven by means of hydraulic or electrical drives.

The extractor 1 allows an easy extraction of motors, too that have lost their symmetrical shape thanks to the fact that for each sliding guide 3 at its portion near the crossing point 4 there is an internal expander 5 adapted to slide along its guide 3 in an opposed and preferably independent manner with respect to the respective claw 6, so as to crush the copper filament between it and the protrusions 7 of said claw 6.

In this way the extractor is able to exert a constant holding force throughout the entire perimeter of the motor by effect of the crushing action carried out by the claws 6 and by the internal expanders 5.

Preferably the internal expanders 5 have movements that are independent of one another and the same can apply for the claws 6. In this way it is easier for them to adapt to an irregularly shaped motor, since each pair of claw 6 - internal expander 5 can have a locking position of the motor with respect to the crossing point 4 that is different from the other pairs.

In one embodiment an extractor 1 referred to in the invention has positioners 9 placed between the sliding guides 3 radially able to rise and lower vertically with respect to said work surface 2 so that their upper ends rest on the copper filament that protrude from the lamellar pack of the electric motor to be processed positioning it at a height with respect to the work surface 2 such that the protrusions 7 of the claws 6 are immediately below the lamellar pack in order to maximize the exertible holding force. The positioners 9 can be positioned between each pair of sliding guides 3, either in alternating pairs or in any configuration that configures equal radial angles between the different positioners 9 so as to guarantee a uniform lifting of the motor that would otherwise be unbalanced.

Preferably, the movement system of the claws 6 and of the internal expanders 5 is of a hydraulic type.

A process for the extraction of copper from the lamellar pack of decommissioned electric motors using a device according to the invention comprises the steps of:
- cutting into two parts the stator of a decommissioned electric motor by means of a shear;
- positioning a cut portion of the electric motor at the crossing point 4 with its radial axis of symmetry orthogonal to the work surface 2 and with the copper filament protruding from the lamellar pack towards the work surface 2, taking care that the internal expanders 5 are placed inside the lamellar pack and the claws 6 outside;
- sliding the internal expanders 5 and the claws 6 in a mutually opposed manner along their sliding guides 3 to crush between them the copper filament protruding from the lamellar pack;
- lifting the pushers 8 to pull the lamellar pack out of the copper filament retained by the claws 6 and by the internal expanders 5;
- moving the claws 6 and the internal expanders 5 away from the copper filament to free it.

Furthermore, the aforementioned process using an extractor referred to in the invention provided with positioners 9 may comprise the step of:
- lifting with respect to the work surface 2 the positioners 9 so that their upper ends rest on the copper filament protruding from the lamellar pack of the electric motor positioning it at a height with respect to the work surface 2 such that the protrusions 7 of the claws 6 are immediately below said lamellar pack.

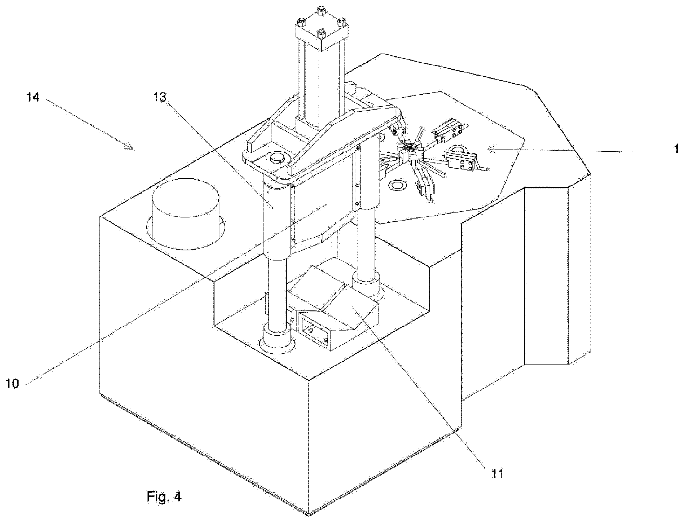

In the embodiment of Fig. 4 an extractor 1 referred to in the invention is included within an extraction bench 14 which also comprises a shear 10 able to slide vertically starting from the upper portion of a support structure 13 that supports it up to a concave housing 11 adapted to maintain the motor in place during the cutting operation located below it.

From the above it can therefore be seen how by using the extractor according to the invention it is possible to extract the copper filaments from a lamellar pack of a decommissioned electric motor even if it no longer has a symmetrical shape, to exert an equal holding force along the perimeter of the motor to be processed and it is possible to adapt the extractor to the different diameters of the various motors to be processed by means of the movement of the internal expanders.

Obviously, the technical design details and the components used, known in the state of the art and in evolution, can be the most varied, provided that all fall within the inventive concept defined by the following claims.

## Claims

1. EXTRACTOR (1) FOR THE EXTRACTION OF COPPER FROM THE LAMELLAR PACK OF DECOMMISSIONED ELECTRIC MOTORS, which comprises a work surface (2) on which there is a plurality of sliding guides (3) which meet each other at a crossing point (4) and which are arranged so as to divide the work surface (2) into circular sectors with the same radial extension with respect to said crossing point (4), on each of said sliding guides (3) there being present, at their external portion with respect to the crossing point (4), a claw (6) able to slide along its sliding guide (3) and provided with protrusions (7) facing the crossing point (4) the set of claws (6) being adapted to slide towards a decommissioned electric motor placed at the crossing point (4) with its radial axis of symmetry orthogonal to the work surface (2) and with the copper filament protruding from the lamellar pack towards the work surface (2), so as to retain by means of the protrusions (7) said copper filament,
the extractor (1) **being characterized in that** each claw (6) has an upper opening inside which a pusher (8) is housed capable of sliding vertically through said opening so as to be able to rise with respect to the claw (6), **and in that** the set of claws (6) allows to pull the lamellar pack out of the copper filament by effect of the upward thrust generated on it by the pushers (8) that lift vertically, and **finally in that** for each sliding guide (3), at its portion near the crossing point (4), there is an internal expander (5) adapted to slide along its guide (3) in an opposed manner with the respective claw (6), so as to crush the copper filament between it and the protrusions of said claw (6).

2. EXTRACTOR (1), according to claim 1, **characterized in that** the sliding guides (3) are arranged in pairs in a radially symmetrical manner with respect to the crossing point (4).

3. EXTRACTOR (1), according to claim 1 or 2, **characterized in that** the sliding movement of one claw (6) is independent of that of the other claws (6).

4. EXTRACTOR (1), according to any one of the preceding claims, **characterized in that** the sliding movement of an internal expander (5) is independent of that of the other expanders (5).

5. EXTRACTOR (1), according to any one of the preceding claims, **characterized in that** between the sliding guides (3) there are on the work surface (2), positioned radially, positioners (9) able to rise and lower vertically with respect to said work surface (2) so that their upper ends rest on the copper filament that protrudes from the lamellar pack of the electric motor to be processed by positioning it at a height with respect to the work surface (2) such that the protrusions (7) of the claws (6) are immediately below the lamellar pack.

6. EXTRACTOR (1), according to any one of the preceding claims, **characterized in that** the movement of the claws (6) and/or of the internal expanders (5) is controlled by hydraulic drive means.

7. EXTRACTOR (1), according to any one of the preceding claims, **characterized in that** the pushers (8) have their base which rests on a support (15) that is placed below the work surface (2) and which can be lifted and lowered vertically so as to lift and lower the pushers (8) accordingly, the bases of the pushers (8) resting on the support (15) being able to slide on it without being retained in a fixed position.

8. PROCESS FOR THE EXTRACTION OF COPPER FROM THE LAMELLAR PACK OF DECOMMISSIONED ELECTRIC MOTORS, using an extractor (1) according to any one of the preceding claims, which comprises the steps of:
- cutting into several parts the stator of a decommissioned electric motor by means of a shear;
- positioning a cut part of the electric motor at the crossing point (4) with its radial axis of symmetry orthogonal to the work surface (2) and with the copper filament protruding from the lamellar pack towards the work surface (2), taking care that the internal expanders (5) are placed inside the lamellar pack and the claws (6) outside;
- sliding the internal expanders (5) and the claws (6) in a mutually opposed manner along their sliding guides (3) to crush between them the copper filament protruding from the lamellar pack;
- lifting the pushers (8) to pull the lamellar pack out of the copper filament retained by the claws (6) and by the internal expanders (5);
- moving the claws (6) and the internal expanders from the copper filament to free it.

9. PROCESS according to claim 8, using an extractor according to claim 4, further comprising the step of:
- lifting with respect to the work surface (2) the positioners (9) so that their upper ends rest on the copper filament protruding from the lamellar pack of the electric motor positioning it at a height with respect to the work surface (2) such that the protrusions (7) of the claws (6) are immediately below the lamellar pack.

10. EXTRACTION BENCH (14), **characterized in that** it comprises an extractor (1), according to any one of claims 1 to 6, and a shear (10) able to slide vertically starting from the upper portion of a support structure (13) that supports it up to a concave housing (11) adapted to maintain the motor in place during the cutting operation and placed below it.

## Patentansprüche

1. EXTRAKTOR (1) FÜR DIE EXTRAKTION VON KUPFER AUS DEM LAMELLENPAKET VON STILLGELEGTEN ELEKTROMOTOREN, der eine Arbeitsfläche (2) umfasst, auf der sich mehrere Gleitführungen (3) befinden, die sich an einem Kreuzungspunkt (4) treffen und die so angeordnet sind, dass sie die Arbeitsfläche (2) in Kreissektoren mit der gleichen radialen Erstreckung in Bezug auf den Kreuzungspunkt (4) unterteilen, wobei auf jeder der Gleitführungen (3) an ihrem äußeren Abschnitt in Bezug auf den Kreuzungspunkt (4) eine Klaue (6) vorhanden ist, die entlang ihrer Gleitführung (3) gleiten kann und mit Vorsprüngen (7) versehen ist, die dem Kreuzungspunkt (4) zugewandt sind, wobei der Satz von Klauen (6) so ausgelegt ist, dass er zu einem stillgelegten Elektromotor hin gleitet, der am Kreuzungspunkt (4) mit seiner radialen Symmetrieachse orthogonal zur Arbeitsfläche (2) angeordnet ist und wobei der Kupferfaden aus dem Lamellenpaket in Richtung der Arbeitsfläche (2) herausragt, um mittels der Vorsprünge (7) den Kupferfaden zurückzuhalten,
wobei der Extraktor (1) **dadurch gekennzeichnet ist, dass** jede Klaue (6) eine obere Öffnung aufweist, in der ein Schieber (8) untergebracht ist, der vertikal durch die Öffnung gleiten kann, um sich in Bezug auf die Klaue (6) erheben zu können, **und dadurch, dass** der Satz von Klauen (6) es ermöglicht, das Lamellenpaket durch die Wirkung des Aufwärtsschubs, der von den sich vertikal erhebenden Schiebern (8) erzeugt wird, aus dem Kupferfaden herauszuziehen, und **schließlich dadurch, dass** für jede Gleitführung (3) an ihrem Abschnitt in der Nähe des Kreuzungspunkts (4) ein innerer Expander (5) vorhanden ist, der ausgelegt ist, um entlang seiner Führung (3) in entgegengesetzter Weise mit der jeweiligen Klaue (6) zu gleiten, um den Kupferfaden zwischen ihm und den Vorsprüngen der Klaue (6) zu quetschen.

2. EXTRAKTOR (1) nach Anspruch 1, **dadurch gekennzeichnet, dass** die Gleitführungen (3) paarweise radialsymmetrisch zum Kreuzungspunkt (4) angeordnet sind.

3. EXTRAKTOR (1) nach Anspruch 1 oder 2, **dadurch gekennzeichnet, dass** die Gleitbewegung einer Klaue (6) unabhängig von der der anderen Klauen (6) ist.

4. EXTRAKTOR (1) nach einem der vorhergehenden Ansprüche, **dadurch gekennzeichnet, dass** die Gleitbewegung eines inneren Expanders (5) unabhängig von der der anderen Expander (5) ist.

5. EXTRAKTOR (1) nach einem der vorhergehenden Ansprüche, **dadurch gekennzeichnet, dass** sich zwischen den Gleitführungen (3) auf der Arbeitsfläche (2) radial positionierte Positionierer (9) befinden, die in der Lage sind, sich vertikal in Bezug auf die Arbeitsfläche (2) zu heben und zu senken, so dass ihre oberen Enden auf dem Kupferfaden aufliegen, der aus dem Lamellenpaket des zu verarbeitenden Elektromotors herausragt, indem er in einer Höhe in Bezug auf die Arbeitsfläche (2) positioniert wird, so dass sich die Vorsprünge (7) der Klauen (6) unmittelbar unter dem Lamellenpaket befinden.

6. EXTRAKTOR (1) nach einem der vorhergehenden Ansprüche, **dadurch gekennzeichnet, dass** die Bewegung der Klauen (6) und/oder der inneren Expander (5) durch hydraulische Antriebsmittel gesteuert wird.

7. EXTRAKTOR (1) nach einem der vorhergehenden Ansprüche, **dadurch gekennzeichnet, dass** die Schieber (8) mit ihrer Basis auf einem Träger (15) ruhen, der unter der Arbeitsfläche (2) angeordnet ist und vertikal angehoben und abgesenkt werden kann, um die Schieber (8) entsprechend anzuheben und abzusenken, wobei die Basen der Schieber (8), die auf dem Träger (15) ruhen, auf diesem gleiten können, ohne in einer festen Position gehalten zu werden.

8. VERFAHREN FÜR DIE EXTRAKTION VON KUPFER AUS DEM LAMELLENPAKET VON STILLGELEGTEN ELEKTROMOTOREN unter Verwendung eines Extraktors nach einem der vorhergehenden Ansprüche, das die folgenden Schritte umfasst:
- Schneiden des Stators eines stillgelegten Elektromotors mittels einer Schere in mehrere Teile;
- Positionieren eines geschnittenen Teils des Elektromotors am Kreuzungspunkt (4) mit seiner radialen Symmetrieachse orthogonal zur Arbeitsfläche (2) und mit dem Kupferfaden, der aus dem Lamellenpaket in Richtung der Arbeitsfläche (2) herausragt, wobei darauf zu achten ist, dass die inneren Expander (5) innerhalb des und die Klauen (6) außerhalb des Lamellenpakets platziert werden;
- Gleiten der inneren Expander (5) und der Klauen (6) in einer einander gegenüberliegenden Weise entlang ihrer Gleitführungen (3), um zwischen ihnen den Kupferfaden, der aus dem Lamellenpaket herausragt, zu zerquetschen;
- Anheben der Schieber (8), um das Lamellenpaket aus dem durch die Klauen (6) und durch die inneren Expander (5) gehaltenen Kupferfaden herauszuziehen;
- Bewegen der Klauen (6) und der inneren Expander vom Kupferfaden, um ihn zu befreien.

9. VERFAHREN nach Anspruch 8 unter Verwendung eines Extraktors nach Anspruch 4, ferner umfassend den Schritt:
- Anheben der Positionierer (9) in Bezug auf die Arbeitsfläche (2), so dass ihre oberen Enden auf dem aus dem Lamellenpaket des Elektromotors herausragenden Kupferfaden ruhen und ihn in einer Höhe in Bezug auf die Arbeitsfläche (2) positionieren, so dass sich die Vorsprünge (7) der Klauen (6) unmittelbar unter dem Lamellenpaket befinden.

10. EXTRAKTIONSBANK (14), **dadurch gekennzeichnet, dass** sie einen Extraktor (1) nach einem der Ansprüche 1 bis 6 und eine Schere (10) umfasst, die in der Lage ist, vertikal vom oberen Abschnitt einer Tragstruktur (13), die sie trägt, bis zu einem konkaven Gehäuse (11) zu gleiten, das dazu ausgelegt ist, den Motor während des Schneidvorgangs an Ort und Stelle zu halten und darunter angeordnet ist.

## Revendications

1. EXTRACTEUR (1) POUR L'EXTRACTION DE CUIVRE DU PAQUET LAMELLAIRE DE MOTEURS ÉLECTRIQUES DÉCONSEILLÉS, comprenant une surface de travail (2) sur laquelle se trouvent plusieurs guides coulissants (3) qui se rencontrent en un point de croisement (4) et qui sont disposés de manière à diviser la surface de travail (2) en secteurs circulaires de même extension radiale par rapport audit point de croisement (4), sur chacun desdits guides coulissants (3) étant présente, à sa partie externe par rapport au point de croisement (4), une griffe (6) qui peut coulisser le long de son guide coulissant (3) et munie de protubérances (7) tournées vers le point de croisement (4), l'ensemble de griffes (6) étant adapté pour coulisser vers un moteur électrique déconstruit placé au point de croisement (4), son axe de symétrie radial étant orthogonal à la surface de travail (2) et le filament de cuivre dépassant du paquet lamellaire vers la surface de travail (2), de manière à le retenir par l'intermédiaire des protubérances (7) le dit filament de cuivre, l'extracteur (1) **étant caractérisé en ce que** chaque griffe (6) présente une ouverture supérieure à l'intérieur de laquelle est logé un poussoir (8) coulissant verticalement à travers cette ouverture afin de pouvoir s'élever par rapport à la griffe (6), **et en ce que** l'ensemble des griffes (6) permet d'extraire le paquet lamellaire du filament de cuivre grâce à la poussée verticale exercée par les poussoirs (8), **et enfin en ce que** chaque guide coulissant (3) est équipé, à proximité du point de croisement (4), d'un extenseur interne (5) coulissant le long de son guide (3) à l'opposé de la griffe (6) correspondante, afin d'écraser le filament de cuivre entre lui et les protubérances de ladite griffe (6).

2. EXTRACTEUR (1), selon la revendication 1, **caractérisé en ce que** les guides coulissants (3) sont disposés par paires de manière radialement symétrique par rapport au point de croisement (4).

3. EXTRACTEUR (1), selon la revendication 1 ou 2, **caractérisé en ce que** le mouvement de coulissement d'une griffe (6) est indépendant de celui des autres griffes (6).

4. EXTRACTEUR (1), selon l'une quelconque des revendications précédentes, **caractérisé en ce que** le mouvement de coulissement d'un détendeur interne (5) est indépendant de celui des autres détendeurs (5).

5. EXTRACTEUR (1), selon l'une quelconque des revendications précédentes, **caractérisé en ce qu'**entre les guides de coulissement (3), sur la surface de travail (2), sont disposés radialement des positionneurs (9) capables de monter et de descendre verticalement par rapport à ladite surface de travail (2) de sorte que leurs extrémités supérieures reposent sur le filament de cuivre qui dépasse du paquet lamellaire du moteur électrique à usiner, en le positionnant à une hauteur par rapport à la surface de travail (2) telle que les saillies (7) des griffes (6) se trouvent immédiatement sous le paquet lamellaire.

6. EXTRACTEUR (1), selon l'une quelconque des revendications précédentes, **caractérisé en ce que** le mouvement des griffes (6) et/ou des détendeurs internes (5) est commandé par des moyens d'entraînement hydraulique.

7. EXTRACTEUR (1), selon l'une quelconque des revendications précédentes, **caractérisé en ce que** la base des poussoirs (8) repose sur un support (15) placé sous le plan de travail (2) et pouvant être soulevé et abaissé verticalement afin de soulever et d'abaisser les poussoirs (8) en conséquence, les bases des poussoirs (8) reposant sur le support (15) pouvant glisser sur celui-ci sans être maintenues en position fixe.

8. PROCÉDÉ D'EXTRACTION DE CUIVRE À PARTIR DU PAQUET LAMELLAIRE DE MOTEURS ÉLECTRIQUES DÉCONSEILLÉS, utilisant un dispositif selon l'une quelconque des revendications précédentes, comprenant les étapes suivantes :
- découper en plusieurs parties du stator d'un moteur électrique déconstruit au moyen d'une cisaille ;
- positionner une pièce coupée du moteur électrique au point de croisement (4), son axe de symétrie radial étant orthogonal au plan de travail (2) et le filament de cuivre dépassant du paquet de lamelles vers le plan de travail (2), en veillant à ce que les extenseurs internes (5) soient placés à l'intérieur du paquet de lamelles et les griffes (6) à l'extérieur ;
- faire coulisser les extenseurs internes (5) et les griffes (6) en opposition le long de leurs guides de coulissement (3) afin d'écraser entre eux le filament de cuivre dépassant du paquet de lamelles ;
- soulever les poussoirs (8) pour extraire le paquet de lamelles du filament de cuivre retenu par les griffes (6) et par les extenseurs internes (5) ;
- dégager les griffes (6) et les extenseurs internes du filament de cuivre.

9. PROCÉDÉ selon la revendication 8, utilisant un dispositif selon la revendication 4, comprenant en outre l'étape suivante :
- soulever les positionneurs (9) par rapport au plan de travail (2) de manière à ce que leurs extrémités supérieures reposent sur le filament de cuivre dépassant du paquet lamellaire du moteur électrique, en le positionnant à une hauteur par rapport au plan de travail (2) telle que les saillies (7) des griffes (6) se trouvent immédiatement sous le paquet lamellaire.

10. BANC D'EXTRACTION (14), **caractérisé en ce qu'**il comprend un extracteur (1), selon l'une quelconque des revendications 1 à 6, et une cisaille (10) apte à coulisser verticalement à partir de la partie supérieure d'une structure de support (13) qui la supporte jusqu'à un boîtier concave (11) apte à maintenir le moteur en place pendant l'opération de coupe et placé en dessous de celui-ci.
